# EUROPÄISCHE PATENTSCHRIFT

(11) **EP 3 180 203 B1**
(45) Veröffentlichungstag und Bekanntmachung des Hinweises auf die Patenterteilung: **15.05.2019**
(21) Anmeldenummer: 15738037.9
(22) Anmeldetag: 09.07.2015
(51) Int. Cl.: B60G 9/02, B62K 5/027, B62K 5/05, B62K 5/08, B62K 5/10

(54) **KRAFTFAHRZEUG**
MOTOR VEHICLE
VÉHICULE AUTOMOBILE

(30) Priorität: 12.08.2014 DE 102014215979
(43) Veröffentlichungstag der Anmeldung: 21.06.2017
(73) Patentinhaber: Volkswagen Aktiengesellschaft, 38440 Wolfsburg (DE)
(72) Erfinder: ANDRONIS, Odysseus, 38302 Wolfenbüttel (DE)
(86) Internationale Anmeldenummer: PCT/EP2015/065721
(87) Internationale Veröffentlichungsnummer: WO 2016/023689

(56) Entgegenhaltungen:
- EP-A2- 1 155 950
- DE-A- 2 707 562
- DE-B- 1 063 473
- US-A- 4 469 344
- US-A- 4 624 469
- US-A1- 2008 258 416
- US-A1- 2009 200 766
- US-A1- 2011 148 052
- US-A1- 2013 168 934

## Beschreibung

Die Erfindung bezieht sich auf das Gebiet der Kraftfahrzeugtechnik und insbesondere auf ein Kraftfahrzeug mit des Merkmales des Oberbegriffs von Patentanspruch 1.

Angesichts einer zunehmenden Verdichtung der Ballungsräume sowie knapper Energieressourcen liegen kompakte, energieeffiziente Kraftfahrzeuge im Trend, welche geeignet sind, das Bedürfnis nach individueller Mobilität zu befriedigen.

Vierrädrige Kleinfahrzeuge vom Typ smart fortwo oder Renault Twizy erfreuen sich daher insbesondere in Großstädten einer erhöhten Beliebtheit, benötigen jedoch immer noch eine verhältnismäßig große Verkehrsfläche.

Eine kompaktere Alternative stellen Krafträder jeglicher Bauart dar, welche jedoch an den Fahrer in Bezug auf ihre Handhabung andere Anforderungen stellen und daher in der Regel nicht als Alternative zu mehrspurigen Kraftfahrzeugen angesehen werden können.

Aus EP 1 484 239 B1 ist ferner ein dreirädriger Motorroller bekannt, der zwei neigbare Vorderräder und ein herkömmlich angetriebenes Hinterrad aufweist. Der Abstand der Vorderräder ist so gewählt, dass der Motorroller mit geringen Modifikationen in Deutschland als einspuriges Kraftrad oder als mehrspuriges Kraftfahrzeug angemeldet werden kann. Die Neigungsmechanik kann bei Fahrzeugstillstand arretiert werden, so dass das Fahrzeug stabil steht. Sitzposition und Fahrempfinden entsprechen jedoch im Wesentlichen einem Kraftrad.

Ein Fahrzeug der eingangs genannten Art ist aus US 2013/0168934 A1 bekannt. Dessen Vorderachse weist eine Viergelenkkonstruktion auf, die über zwei Gelenke an der Fahrzeugkarosserie gelagert ist. Über eine Lenkung kann an den Vorderrädern ein Lenkwinkel unabhängig von der Neigung des Fahrzeugaufbaus eingestellt werden. Ein ähnliches Fahrzeug ist ferner aus US 4,624,469 bekannt.

Vor diesem Hintergrund liegt der Erfindung die Aufgabe zu Grunde, ein Kraftfahrzeugkonzept zu entwickeln, welches im Vergleich zu herkömmlichen Kleinfahrzeugen kompakter ist, im Vergleich zu Krafträdern jedoch vom Fahrer eines zweispurigen Kraftfahrzeugs einen geringeren Umstellungsaufwand erfordert.

Diese Aufgabe wird durch ein Kraftfahrzeug gemäß Patentanspruch 1 gelöst.

Das erfindungsgemäße Kraftfahrzeug umfasst eine Fahrzeugkarosserie mit einer Sitzposition für einen Fahrer, ein Hinterrad, das an einem hinteren Endabschnitt der Fahrzeugkarosserie abgestützt ist, eine Vorderachse, die an einem vorderen Endabschnitt der Fahrzeugkarosserie in einer Fahrzeuglängsmittelebene um eine sich in Fahrzeuglängsrichtung erstreckende Achse drehbar gelagert ist, und zwei Vorderräder, die lenkbar an der Vorderachse angeordnet sind.

Die schwenkbare Ankopplung der Vorderachse an der Fahrzeugkarosserie ermöglicht eine hohe Wendigkeit des Fahrzeugs mit kleinem Wendekreisdurchmesser. Dies unterscheidet die erfindungsgemäße Lösung auch deutlich vom dreirädrigen Messerschmitt-Kabinenroller.

Insbesondere eignet sich das erfindungsgemäße Fahrzeugkonzept für einsitzige Mikrofahrzeuge, deren Verkehrsfläche in etwa einem Viertel derer herkömmlicher Personenkraftwagen entspricht.

An dem Kraftfahrzeug ist eine Lenkeinrichtung vorgesehen , welche die Fahrzeugkarosserie derart mit den Vorderrädern koppelt, dass ein Wankwinkel der Fahrzeugkarosserie mit einem Lenkwinkel der Vorderräder verknüpft ist. Im Vergleich zu herkömmlichen vierrädrigen Kleinfahrzeugen ist somit eine Kopplung zwischen der Wankbewegung der Fahrzeugkarosserie und dem Lenkeinschlag vorgesehen, wodurch sich eine dynamische Fahrweise ähnlich einem Kraftrad ergibt. Im Vergleich zu herkömmlichen Krafträdern kann gleichwohl eine von herkömmlichen zweispurigen Kraftfahrzeugen bekannte Sitzposition beibehalten werden, wodurch die Umstellung von einem Personenkraftwagen leichter fällt.

Ferner ist die Vorderachse sehr einfach als Starrachse ausgebildet, die über ein zentrales Gelenk auf einer Höhe im Bereich der Fahrzeugräder an der Karosserie drehbar gelagert ist. Hierdurch wird zudem eine niedrige Bauhöhe des Fahrzeugs begünstigt.

Dadurch, dass sich ein Fahrerfußraum in Fahrzeuglängsrichtung bis in einen Bereich zwischen die Vorderräder erstreckt, ergibt sich eine Sitzposition ähnlich einem Personenkraftwagen und damit eine reduzierte Windangriffsfläche in Fahrtrichtung. Hierbei ist es ferner von Vorteil, dass die Sitzposition eine Sitzfläche aufweist, welche auf einer Höhe im Bereich der Fahrzeugräder liegt.

Vorteilhafte Ausgestaltungen der Erfindung sind Gegenstand weiterer Patentansprüche Weiterhin kann die Lenkeinrichtung zwei Lenkstangen aufweisen, die jeweils mit einem ersten Endabschnitt an einem Radträger eines Vorderrads und mit einem zweiten Endabschnitt an der Fahrzeugkarosserie angelenkt sind. Hierdurch wird auf besonders einfache Art und Weise eine Kopplung zwischen dem Wankwinkel der Fahrzeugkarosserie und einem Lenkwinkel der Vorderräder erzielt.

Im Hinblick auf die Ausnutzung dieses Effektes ist es weiter von Vorteil, wenn die karosserieseitige Anlenkung der Lenkstangen in Bezug auf eine Fahrzeughochrichtung oberhalb der radseitigen Anlenkung liegt. Die Lenkstangen verlaufen somit jeweils von innen oben nach außen unten. Über die Lage der Anbindungspunkte kann das Ausmaß der Wankneigung der Fahrzeugkarosserie relativ zum Lenkeinschlag beeinflusst werden.

Ein Lenken des Fahrzeugs kann bereits durch eine Gewichtsverlagerung des Fahrers erzielt werden. Zur besseren Kontrolle des Lenkeinschlags ist jedoch bevorzugt eine Lenkungshandhabe vorgesehen, über welche durch den Fahrer die Fahrzeugkarosserie relativ zur erfindungsgemäß starren Vorderachse verschwenkt werden kann. Gegebenenfalls kann hierzu zusätzlich ein Lenkgetriebe sowie gegebenenfalls weiterhin eine Fremdkraft-Lenkunterstützung vorgesehen werden, um dem Fahrer das Lenken zu erleichtern. Die Lenkungshandhabe kann beispielsweise mit einem Schubkurbelgetriebe gekoppelt sein, welches sich an der Fahrzeugkarosserie sowie an der Vorderachse abstützt, derart, dass bei Betätigung der Lenkungshandhabe die Fahrzeugkarosserie und die Vorderachse gegeneinander verschwenken. Ein solches Schubkurbelgetriebe lässt sich mit geringem Aufwand verwirklichen. Jedoch können auch andere Getriebe vorgesehen werden, welche es ermöglichen, ein Relativverschwenken von Fahrzeugkarosserie und Vorderachse zu bewerkstelligen.

Der Antrieb des Kraftfahrzeugs kann mittels eines Verbrennungsmotors oder mittels eines Elektromotors erfolgen.

Im Hinblick auf ein geringes Fahrzeuggewicht sowie auf eine kompakte Bauweise ist es besonders vorteilhaft, wenn zum Antrieb ein Radnabenmotor zum Einsatz kommt. Vorzugsweise wird dabei das Hinterrad angetrieben. Jedoch ist auch ein Antrieb über die Vorderräder oder ein Allradantrieb möglich.

Das Hinterrad kann an einer Schwinge drehbar gelagert sein, die ihrerseits schwenkbar an der Fahrzeugkarosserie gelagert und durch eine Feder-Dämpfer-Anordnung gegen die Fahrzeugkarosserie abgestützt ist. Dies ermöglicht einen hohen Fahrkomfort für den Fahrer.

Bevorzugt ist die Feder-Dämpfer-Anordnung in Bezug auf die Fahrzeuglängsrichtung hinter einem Fahrersitz, insbesondere einer Rückenlehne eines Fahrersitzes angeordnet, um eine körpernahe Federung zu ermöglichen.

Gemäß einer weiteren vorteilhaften Ausgestaltung der Erfindung umfasst die Fahrzeugkarosserie eine auf die Sitzposition einer Person beschränkte Fahrgastzelle, wodurch sich ein Einpersonenmikrofahrzeug ergibt.

Ferner kann die Fahrgastzelle als geschlossene Fahrgastzelle ausgebildet werden, wodurch sich im Vergleich zu einem herkömmlichen Kraftrad ein deutlich besserer Wetterschutz ergibt und sich zudem eine bessere Aerodynamik verwirklichen lässt.

Es jedoch auch möglich, das Kraftfahrzeug in offener oder teilweise offener Bauweise auszuführen. Die Karosserie kann dabei gegebenenfalls auf eine Rahmenkonstruktion reduziert werden.

Ferner kann ein Laderaum zur Beförderung von Gütern vorgesehen werden.

Im Fall eines Elektroantriebs wird eine Fahrzeugsbatterie bevorzugt unter der Sitzfläche angeordnet, wodurch ein niedriger Fahrzeugschwerpunkt erzielt wird. An dieser Stelle kann gegebenenfalls auch ein etwaig benötigter Kraftstofftank untergebracht werden.

Nachfolgend wird die Erfindung anhand von in der Zeichnung dargestellten Ausführungsbeispielen näher erläutert. Die Zeichnung zeigt in:
- Figur 1: eine Längsschnittansicht eines ersten Ausführungsbeispiels eines Kraftfahrzeugs nach der Erfindung,
- Figur 2: eine Ansicht von oben auf das Kraftfahrzeug aus Figur 1 ohne Verkleidung,
- Figur 3: ein zweites Ausführungsbeispiel zur Veranschaulichung des Wanklenkens,
- Figur 4: eine Vorderansicht bei Geradeausfahrt,
- Figur 5: eine Vorderansicht bei Rechtskurvenfahrt,
- Figur 6: eine Längsschnittansicht eines dritten Ausführungsbeispiels eines Kraftfahrzeugs nach der Erfindung,
- Figur 7: eine Vorderansicht des Kraftfahrzeugs nach dem dritten Ausführungsbeispiel bei Geradeausfahrt,
- Figur 8: eine Vorderansicht des Kraftfahrzeugs nach dem dritten Ausführungsbeispiel bei Rechtskurvenfahrt,
- Figur 9: eine räumliche Außenansicht des Kraftfahrzeugs nach dem dritten Ausführungsbeispiel von schräg vorne aus gesehen, und in
- Figur 10: die benötigte Verkehrsfläche im Vergleich zu herkömmlichen Mittelklasse-Personenkraftwagen.

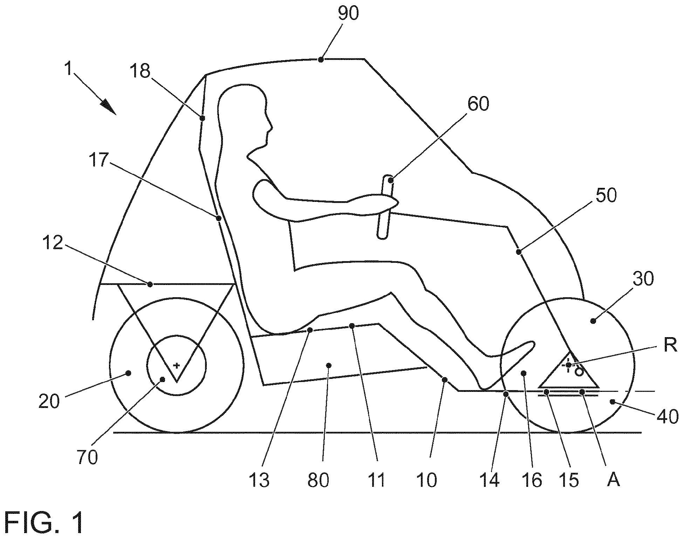

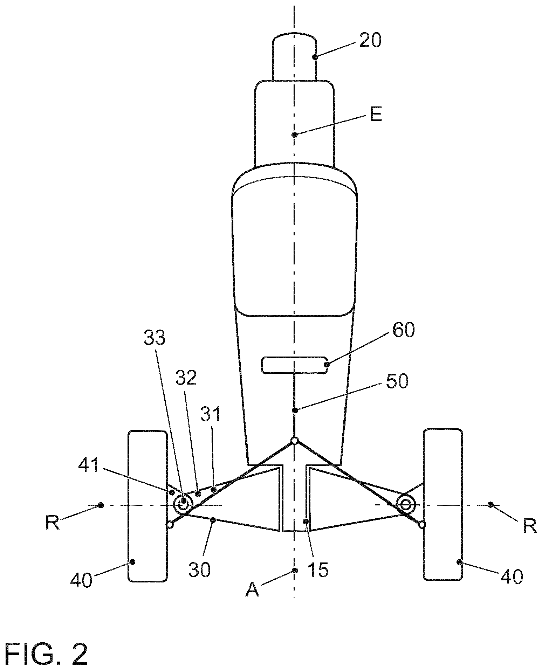

Das in den Figuren 1 und 2 dargestellte erste Ausführungsbeispiel bezieht sich auf ein mehrspuriges Kraftfahrzeug mit drei Rädern, welches sich insbesondere als Mikrokraftfahrzeug eignet. Dieses ist, wie in den Figuren beispielhaft gezeigt, zur Beförderung einer Person ausgelegt und weist dementsprechend lediglich eine Sitzposition für einen Fahrer und ebensolche Abmessungen auf. Es ist auch möglich, eine zusätzliche Sitzposition für eine zweite Person vorzusehen, wodurch jedoch die Außenabmessungen zunehmen. Eine solche zweite Sitzposition kann entweder hinter der Sitzposition des Fahrers oder neben derselben vorgesehen sein.

Das erfindungsgemäße Kraftfahrzeug 1 weist eine Fahrzeugkarosserie 10 auf, an welcher besagte Sitzposition 11 für den Fahrer vorgesehen ist. Die Fahrzeugkarosserie 10 kann als Rahmenkonstruktion ausgeführt werden, welche gegebenenfalls mit einer Außenverkleidung versehen wird. Ferner ist es möglich, die Fahrzeugkarosserie 10 als selbsttragendes Monocoque auszuführen.

An einem hinteren Endabschnitt 12 der Fahrzeugkarosserie 10 ist ein Hinterrad 20 abgestützt. Letzteres ist in der Längsmittelebene E des Kraftfahrzeugs 1 platziert. Die in Figur 1 dargestellte Ausführung der Hinterradabstützung ist dabei lediglich beispielhafter Natur. Wie weiter unten noch näher erläutert werden wird, kann diese auch auf andere Art und Weise erfolgen. Insbesondere kann zusätzlich eine Feder-Dämpfer-Anordnung zwischen dem Hinterrad 20 und der Fahrzeugkarosserie 10 eingegliedert sein, um den Fahrkomfort und die Fahrsicherheit zu erhöhen.

Das Hinterrad 20 befindet sich hinter der Sitzposition 11 des Fahrers. Eine gegebenenfalls vorhandene Feder-Dämpfer-Anordnung kann beispielsweise zwischen dem Hinterrad 20 und der Sitzposition 11 angeordnet werden.

Wie insbesondere Figur 1 entnommen werden kann, liegt die Sitzfläche 13 der Sitzposition 11 auf einer Höhe im Bereich des Hinterrads 20. Der Fahrer kann somit beim Fahren eine Haltung einnehmen, wie sie ihm von herkömmlichen Personenkraftwagen bekannt ist. Dies begünstigt zudem eine geringe Bauhöhe des Kraftfahrzeugs 1. Dazu kann sich ferner eine Rückenlehne 17 zumindest bis auf Schulterhöhe des Fahrers erstrecken. Zudem kann an der Rückenlehne 17 eine Kopfstütze 18 vorgesehen sein.

Insbesondere kann der Fahrer eine Haltung einnehmen, bei der die Knie weniger stark gebeugt werden müssen, als auf einem Kraftrad. Ein Fahrerfußraum 16 kann sich hierzu in Fahrzeuglängsrichtung bis in einen Bereich zwischen die Vorderräder 40 erstrecken.

Das Kraftfahrzeug 1 umfasst weiterhin eine Vorderachse 30, an welcher zwei Vorderräder 40 lenkbar angeordnet sind. Die Vorderachse 30 ist an einem vorderen Endabschnitt 14 der Fahrzeugkarosserie 10 um eine sich in Fahrzeuglängsrichtung erstreckende Achse A drehbar gelagert ist. Die Achse A liegt in der Fahrzeuglängsmittelebene E. Vorzugsweise befindet sich diese zudem unterhalb der Radmitte R der Vorderräder 40.

Die Vorderachse 30 weist zwei sich überwiegend in Fahrzeugquerrichtung erstreckende Lenker 31 auf, welche zu einer Starrachse verbunden sein können. Diese Starrachse ist über ein zentrales Gelenk 15 in Fahrzeugmitte an der Fahrzeugkarosserie 10 gelagert. Radseitige Endabschnitte 32 der Lenker 31 sind über Gelenke 33 mit jeweils einem Radträger 41 gekoppelt, welcher das betreffende Vorderrad 40 drehbar lagert.

Die schwenkbare Ankopplung der Vorderachse 30 an der Fahrzeugkarosserie 10 ermöglicht eine hohe Wendigkeit des Kraftfahrzeugs 1 mit kleinem Wendekreisdurchmesser. Beim Durchfahren einer Kurve neigt sich die Fahrzeugkarosserie 10 zur Kurveninnenseite hin. Hierbei kommt es zu einer Relativverdrehung zwischen der Fahrzeugkarosserie 10 und der Vorderachse 30 im zentralen Gelenk 15 und damit um die Achse A.

Die Drehbarkeit kann so ausgeführt werden, dass ein maximaler Wankwinkel der Fahrzeugkarosserie 10 im Bereich zwischen 10 und 20° zur Vertikalen liegt.

An dem Kraftfahrzeug 1 ist weiterhin eine Lenkeinrichtung 50 vorgesehen, um einen Lenkeinschlag der Vorderräder 40 zu bewirken. Zur Kontrolle des Lenkeinschlags durch den Fahrer dient eine Lenkungshandhabe 60, beispielsweise ein Lenkrad, das mit der Lenkeinrichtung 50 in Verbindung steht. Jedoch kann die Lenkungshandhabe 60 auch anders, beispielsweise als Querbügel, Joystick oder dergleichen ausgeführt werden. Die Verbindung zur Lenkeinrichtung 50 kann als mechanische Kopplung oder aber auch als Steer-by-wire-System ausgeführt werden.

Im einfachsten Fall weist die Lenkeinrichtung 50 ein durch den Fahrer betätigbares Gestänge auf. Jedoch sind auch andere Getriebetypen verwendbar. Insbesondere kann dabei auch eine Fremdkraft-Lenkunterstützung vorgesehen werden, um dem Fahrer das Lenken zu erleichtern.

Die Lenkeinrichtung 50 kann so ausgeführt sein, dass sich bei einem bestimmten Lenkwinkel zwangsläufig ein bestimmter Wankwinkel der Fahrzeugkarosserie 10 einstellt. Es ist jedoch auch möglich, beispielsweise mit Hilfe eines Überlagerungsgetriebes, die Beziehung von Wankwinkel zu Lenkwinkel zu modifizieren.

Der Antrieb des Kraftfahrzeugs 1 erfolgt beispielsweise mittels eines Verbrennungsmotors oder mittels eines Elektromotors. Bei dem dargestellten Ausführungsbeispiel kommt ein Radnabenmotor 70 zum Einsatz, der vorliegend am Hinterrad 20 angeordnet ist. Grundsätzlich können jedoch auch die Vorderräder 40 oder alle Räder über einen Radnabenmotor 70 angetrieben werden.

Zur Energieversorgung kann eine Fahrzeugbatterie 80 unter der Sitzfläche 13 angeordnet werden. Bei anderen Antrieben kann an dieser Stelle auch ein etwaig benötigter Kraftstofftank untergebracht werden.

Die Fahrzeugkarosserie 10 kann als geschlossene Fahrgastzelle ausgebildet werden, welche auf die Sitzposition von einer Person oder von zwei Personen beschränkt ist. Figur 1 zeigt eine entsprechende Verkleidung 90, die einen vollständigen Wetterschutz für den Fahrer bietet und aerodynamisch optimiert werden kann. Der Einstieg kann über eine einzige Einstiegsöffnung erfolgen. Möglich ist ferner eine offene oder teilweise offene, beispielsweise lediglich seitlich offene Bauweise.

Zur Gewährleistung des gewünschten Wankens der Fahrzeugkarosserie 10 bleiben die Vorderräder 40 unverkleidet oder erhalten eine von der Verkleidung 90 der Fahrgastzelle unabhängige Verkleidung.

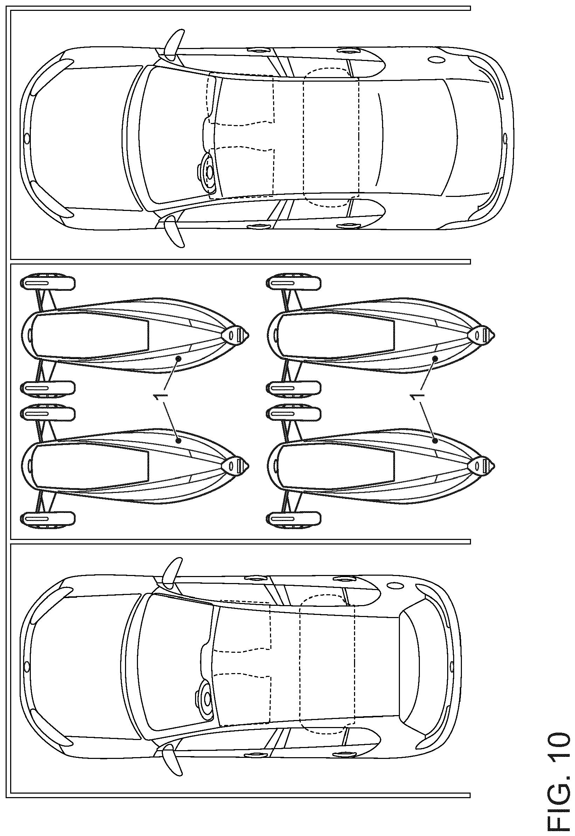

Ein entsprechendes Mikrokraftfahrzeug kann so ausgestaltet werden, dass dieses, wie in Figur 10 gezeigt, nur etwa ein Viertel der Verkehrsfläche eines herkömmlichen Mittelklasse-Personenkraftwagens einnimmt.

Insbesondere kann ein solches Mikrokraftfahrzeug mit einer maximalen Fahrzeuglänge von 1800 bis 2200 mm auskommen.

Die maximale Breite liegt vorzugsweise im Bereich von 900 bis 1150 mm. Sie kann damit deutlich höher sein als bei dem aus EP 1 484 239 B1 bekannten dreirädrigen Motorroller. Damit ist im Vergleich zu solchen Rollern eine Stabilität bei Fahrzeugstillstand ohne zusätzliche Maßnahmen gewährleistet.

Die maximale Höhe liegt bevorzugt im Bereich von 1250 bis 1450 mm.

Der kleinste Wendekreisdurchmesser liegt im Bereich von 6000 bis 7000 mm.

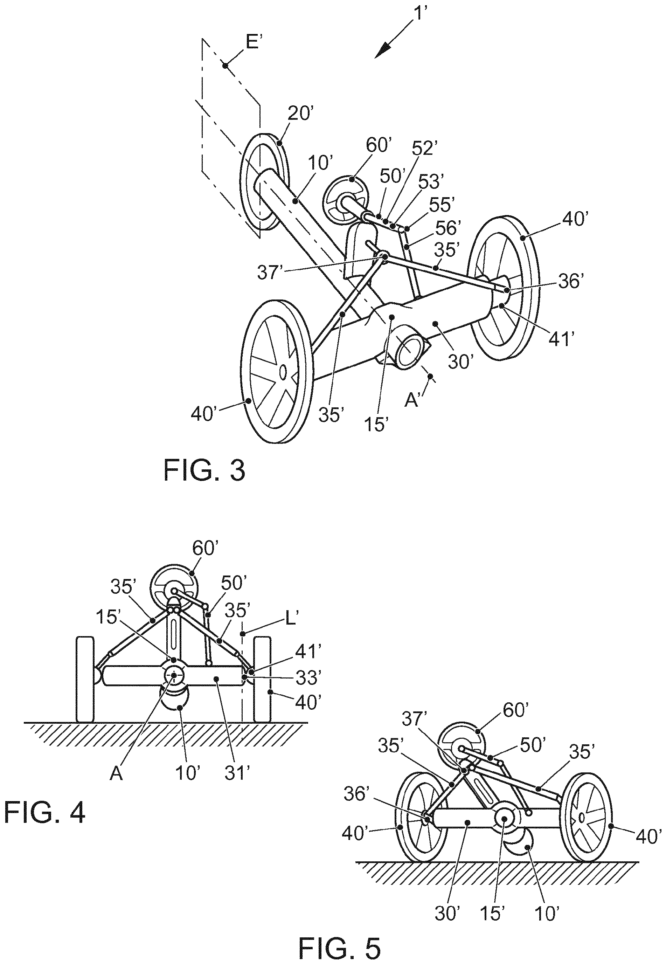

Anhand eines zweiten Ausführungsbeispiels wird nachfolgend anhand der Figuren 3 bis 5 eine mögliche Lenk-Neige-Mechanik für das oben beschriebene Kraftfahrzeug 1 näher erläutert. Es sei an dieser Stelle jedoch ausdrücklich betont, dass bei dem im Rahmen des ersten Ausführungsbeispiels erläuterten Kraftfahrzeug auch andere Lenkeinrichtungen 50 zum Einsatz kommen können.

Die Figuren 3 bis 5 zeigen eine Bodengruppe für ein Kraftfahrzeug 1' mit drei Rädern, nämlich einem Hinterrad 20' und zwei Vorderrädern 40'. Die Bodengruppe des Kraftfahrzeugs 1' umfasst eine Fahrzeugkarosserie 10' mit einer nicht näher dargestellten Sitzposition 11' für einen Fahrer.

An einem vorderen Endabschnitt 14' der Fahrzeugkarosserie 10' ist eine Vorderachse 30' in Fahrzeugmitte um eine sich in Fahrzeuglängsrichtung erstreckende Achse A' drehbar gelagert. Während sich das Hinterrad 20' an einem hinteren Endabschnitt 12' der Fahrzeugkarosserie 10' abstützt, sind die zwei Vorderräder 40' jeweils lenkbar an der Vorderachse 30' angeordnet. Weiterhin ist eine Lenkeinrichtung 50' vorgesehen, welche die Fahrzeugkarosserie 10' derart mit den Vorderrädern 40' koppelt, dass ein Wankwinkel der Fahrzeugkarosserie 10' mit einem Lenkwinkel der Vorderräder 40' verknüpft ist.

Die Vorderachse 30' ist erfindungsgemäß als Starrachse ausgebildet, welche sich von einem zentralen Gelenk 15' in der Fahrzeuglängsmittelebene E' nach außen erstreckende Lenker 31 aufweist. Im einfachsten Fall kann diese ein starrer Querträger sein. Das zentrale Gelenk 15' ist vorzugsweise auf einer Höhe im Bereich der Vorderräder 40' an der Fahrzeugkarosserie 10' drehbar gelagert und weiter bevorzugt unterhalb der Radmitten R' der Vorderräder 40' angeordnet.

Die Lenker 31' sind an radseitigen Endabschnitten 32' jeweils gelenkig an einen Radträger 41' angekoppelt, welcher das betreffende Vorderrad 40' drehbar lagert. Die entsprechenden Gelenke 33' bewirken eine überwiegend in Vertikalrichtung verlaufende Lenkachse L' für das jeweilige Fahrzeugrad 40'.

Die Lenkeinrichtung 50' des zweiten Ausführungsbeispiels weist eine Lenk-Neige-Mechanik auf. Dazu ist je Vorderrad 40' eine Lenkstange 35' vorgesehen. Diese ist mit einem ersten Endabschnitt 36' an dem Radträger 41' des betreffenden Vorderrads 40' und mit einem zweiten Endabschnitt 37' an der Fahrzeugkarosserie 10' angelenkt.

Vorzugsweise liegt die karosserieseitige Anlenkung der Lenkstange 35' in Bezug auf eine Fahrzeughochrichtung oberhalb der radseitigen Anlenkung. Hierzu kann an der Fahrzeugkarosserie 10' gegebenenfalls eine entsprechende Konsole vorgesehen werden.

Die karosserieseitige gelenkige Anlenkung der Lenkstangen 35' an der Fahrzeugkarosserie 10' bleibt im Betrieb des Kraftfahrzeugs in Bezug auf die Fahrzeugkarosserie 10' stationär. Hierdurch wird eine Zwangskopplung zwischen der Fahrzeugkarosserie 10' und den Vorderrädern 40' derart erzielt, dass ein bestimmter Wankwinkel der Fahrzeugkarosserie 10' mit einem bestimmten Lenkwinkel der Vorderräder 40' verknüpft ist.

Neigt sich die Fahrzeugkarosserie 10' zur Seite (Wanken), so führt dies aufgrund der Lenkstangen 35' automatisch auch zu einem bestimmten Lenkeinschlag der Vorderräder 40'. Hierbei kommt es zu einer Relativverdrehung zwischen der Fahrzeugkarosserie 10' und der Vorderachse 30' im zentralen Gelenk 15' und damit um die Achse A', wie dies in Figur 5 dargestellt ist. Da die Anbindung der Lenkstangen 35' an der Fahrzeugkarosserie 10' ortsfest ist, bedingt die relative Verlagerung der Fahrzeugkarosserie 10' eine Verschiebung der radseitigen ersten Endabschnitte 36' der Lenkstangen 35' und damit eine Verdrehung der Radträger 41' um die Lenkachsen L'. Beim Durchfahren einer Kurve neigt sich die Fahrzeugkarosserie 10' zur Kurveninnenseite hin.

Ein Neigen der Fahrzeugkarosserie 10' zur Seite kann beispielsweise bereits durch eine Gewichtsverlagerung des Fahrers erzielt werden. Zur besseren Kontrolle des Lenkverhaltens durch den Fahrer wird bevorzugt zusätzlich eine Lenkungshandhabe 60' vorgesehen, über welche der Fahrer den Lenkeinschlag steuern kann.

Bei dem dargestellten Ausführungsbeispiel dient die Lenkungshandhabe 60' dazu, die Fahrzeugkarosserie 10' relativ zur Vorderachse 30' zu verschwenken. Die Radträger 41' werden dann aufgrund der Zwangskopplung der Lenkstangen 35' verschwenkt.

Möglich wäre es jedoch auch, einen fahrerseitigen Lenkbefehl zwischen den Radträgern 41' und der Vorderachse 30' einzubringen. Aufgrund der Lenkstangen 35' ergibt sich damit automatisch ein seitliches Neigen der Fahrzeugkarosserie 10'.

Entsprechende Getriebe können je nach Bedarf vorgesehen und gegebenenfalls zusätzlich fremdkraftbetätigt oder fremdkraftunterstützt ausgeführt werden.

Nachfolgend wird beispielhaft ein Schubkurbelgetriebe 52' vorgestellt, welches ein einfache und technisch wenig aufwändige Möglichkeit zur mechanischen Einkopplung eines fahrerseitigen Lenkbefehls darstellt. Das Schubkurbelgetriebe 52' stützt sich an der Fahrzeugkarosserie 10' sowie an der Vorderachse 30' ab, und zwar derart, dass bei Betätigung der Lenkungshandhabe 60' die Fahrzeugkarosserie 10' und die Vorderachse 30' gegeneinander verschwenken. Die Drehbarkeit kann so ausgeführt werden, dass ein maximaler Wankwinkel der Fahrzeugkarosserie 10 im Bereich zwischen 10 und 20° zur Vertikalen liegt.

Das Schubkurbelgetriebe 52' weist einen eingangsseitigen Hebel 53' und einen ausgangsseitigen Hebel 54' auf, welche an jeweiligen Enden über ein Gelenk 55' schwenkbar miteinander verbunden sind. Das andere Ende des eingangsseitigen Hebels 53' ist drehbar an der Fahrzeugkarosserie 10' gelagert und mit der Lenkungshandhabe 60' gekoppelt, um durch diese in Drehung versetzt zu werden. Der ausgangsseitige Hebel 54' schließt gelenkig außerhalb der Fahrzeuglängsmittelebene E' an einen Lenker 31' der Vorderachse 30' an.

Zwischen der Lenkungshandhabe 60' und dem Schubkurbelgetriebe 52' kann eine zusätzliche Getriebestufe, beispielsweise in Form eines Scheckengetriebes vorgesehen werden. Hierdurch kann die Lenkübersetzung zwischen der Lenkungshandhabe und dem Lenkwinkel der Vorderräder 40' beeinflusst werden. Das Schneckengetriebe kann selbsthemmend ausgeführt sein.

Die schwenkbare Ankopplung der Vorderachse 30' an der Fahrzeugkarosserie 10' nebst vorstehend erläuterter Lenk-Neige-Mechanik ermöglicht eine sehr hohe Wendigkeit des Kraftfahrzeugs 1' sowie sehr kleine Wendekreisdurchmesser.

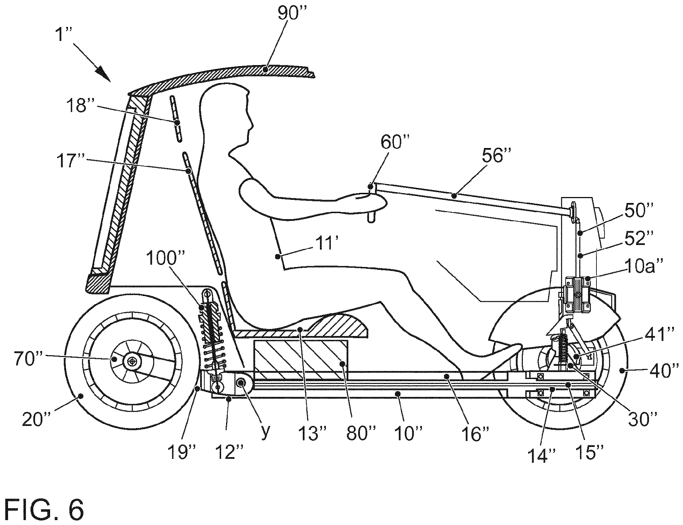

Ein drittes Ausführungsbeispiel eines mehrspurigen Kraftfahrzeugs 1" mit drei Rädern ist in den Figuren 6 bis 9 dargestellt.

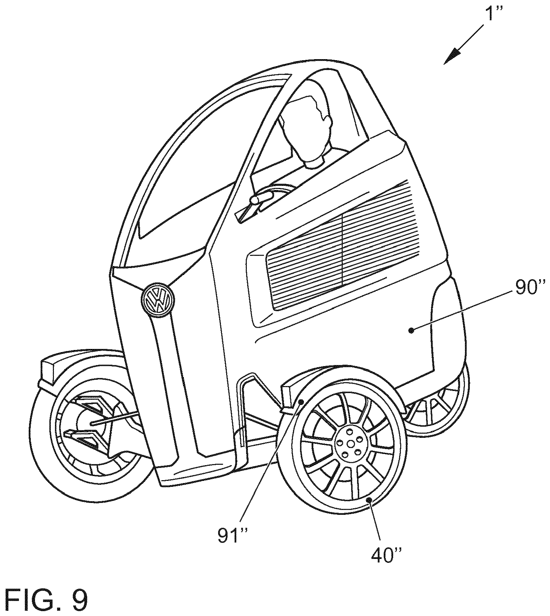

Figur 9 zeigt ein Mikrokraftfahrzeug welches lediglich eine Sitzposition 11" für einen Fahrer aufweist und dementsprechend kompakt ausgebildet ist. Es ist auch möglich, eine zusätzliche Sitzposition für eine zweite Person vorzusehen, wodurch jedoch die im Zusammenhang mit dem ersten Ausführungsbeispiel genannten Außenabmessungen zunehmen können. Eine zweite Sitzposition kann entweder hinter der Sitzposition des Fahrers oder neben derselben vorgesehen sein.

Das Kraftfahrzeug 1" weist eine Fahrzeugkarosserie 10" auf, die als verkleidete oder unverkleidete Rahmenkonstruktion oder als selbsttragendes Monocoque ausgeführt werden kann.

An einem hinteren Endabschnitt 12" der Fahrzeugkarosserie 10" ist ein Hinterrad 20" über eine Schwinge 19" abgestützt. Das Hinterrad 20" ist in der Längsmittelebene E" des Kraftfahrzeugs 1" angeordnet. Die Schwinge 19" in an einen hinteren Endabschnitt 12" der Fahrzeugkarosserie 10" gelenkig angekoppelt und um eine Achse Y in Fahrzeugquerrichtung drehbar. Sie verläuft überwiegend in Fahrzeuglängsrichtung von einem karosserieseitigen Gelenk nach hinten.

Zwischen der Schwinge 19" und der Fahrzeugkarosserie 10" ist eine Feder-Dämpfer-Anordnung 100" eingegliedert.

Wie Figur 6 entnommen werden kann, liegt die Sitzfläche 13" der Sitzposition 11" des Fahrers auf einer Höhe im Bereich des Hinterrads 20". Der Fahrer kann somit beim Fahren eine Haltung einnehmen, wie sie ihm von herkömmlichen Personenkraftwagen bekannt ist. Dies begünstigt eine geringe Bauhöhe des Kraftfahrzeugs 1".

Ferner ist der Sitzposition 11" eine Rückenlehne 17" zugeordnet, an der zudem eine Kopfstütze 18" vorgesehen sein kann. Die Rückenlehne 17" ist vorzugsweise zumindest bis auf Schulterhöhe eines durchschnittlichen Fahrers hochgezogen.

Im Hinblick auf einen guten Federungskomfort ist die Feder-Dämpfer-Anordnung 100" bevorzugt körpernah zum Fahrer zwischen der Rückenlehne 17" und dem Hinterrad 20" angeordnet.

Der Fahrer kann in der Sitzposition 11" eine Haltung einnehmen, bei der die Knie weniger stark gebeugt werden müssen, als auf einem Kraftrad. Ein Fahrerfußraum 16" kann sich hierzu in Fahrzeuglängsrichtung bis in einen Bereich zwischen die Vorderräder 20" erstrecken.

Das Kraftfahrzeug 1" umfasst weiterhin eine Vorderachse 30", an welcher zwei Vorderräder 40" lenkbar angeordnet sind. Die Vorderachse 30" ist wie in den zuvor erläuterten Ausführungsbeispielen an einem vorderen Endabschnitt 14" der Fahrzeugkarosserie 10" um eine sich ein Fahrzeuglängsrichtung erstreckende Achse A" drehbar gelagert ist. Die Achse A" liegt im Bereich der Höhe eines Vorderrads 40", bevorzugt unterhalb der Radmitte R".

Die Vorderachse 30" weist zwei sich überwiegend in Fahrzeugquerrichtung erstreckende Lenker 31" auf, welche in eine Starrachse integriert sind. Die Starrachse ist über ein zentrales Gelenk 15" in der Fahrzeuglängsmittelebene E gelagert. Radseitige Endabschnitte 32" der Lenker 31" sind über Gelenke 33a" und 33b" mit jeweils einem Radträger 41" gekoppelt, welcher das betreffende Vorderrad 40" drehbar lagert. Die Gelenke 33a" und 33b" definieren dabei je Vorderrad 40" jeweils eine überwiegend vertikal verlaufende Lenkachse L", um die der jeweilige Radträger 41" schwenkbar am betreffenden Lenker 31" gelagert ist. Weiterhin ist je Vorderrad 40" eine Lenkstange 35" vorgesehen, die mit einem ersten Endabschnitt 36" an dem Radträger 41" des betreffenden Vorderrads 40" und mit einem zweiten Endabschnitt 37" an der Fahrzeugkarosserie 10" gelenkig angekoppelt ist. Vorzugsweise liegt die karosserieseitige Anlenkung der Lenkstange 35" in Bezug auf eine Fahrzeughochrichtung oberhalb der radseitigen Anlenkung. Hierzu kann an der Fahrzeugkarosserie 10" gegebenenfalls eine entsprechende Konsole 10a" vorgesehen sein. Die karosserieseitige Anlenkung der Lenkstangen 35" ist in Bezug auf die Fahrzeugkarosserie 10" stationär, so dass sich eine Zwangskopplung zwischen der Fahrzeugkarosserie 10" und den Vorderrädern 40" derart ergibt, dass der Lenkwinkel der Vorderräder 40" vom Wankwinkel der Fahrzeugkarosserie 10" abhängig ist. Beide Größen sind somit kinematisch eindeutig miteinander verknüpft.

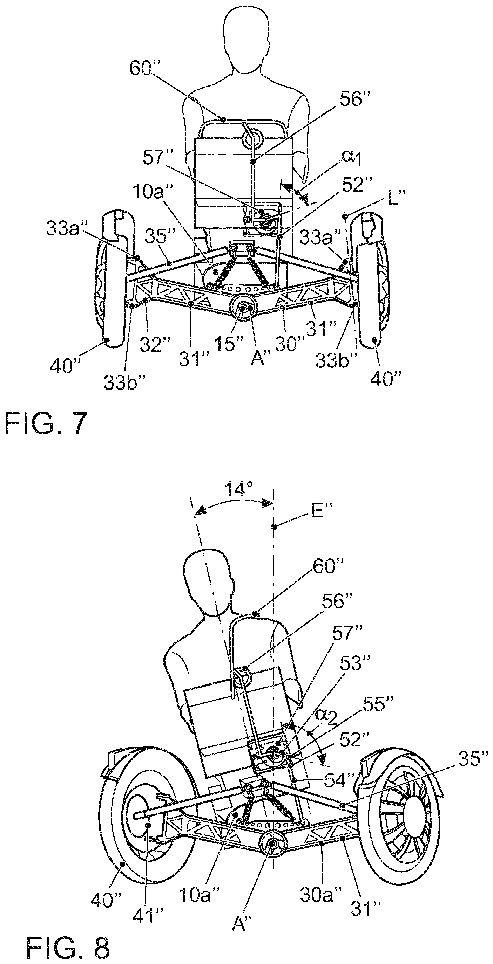

Figur 7 zeigt ein Kraftfahrzeug 1 bei Geradeausfahrt während Figur 8 das gleiche Kraftfahrzeug 1" beim Durchfahren einer Rechtskurve zeigt. Wankt die Fahrzeugkarosserie 10" zur Seite, so führt dies aufgrund der Lenkstangen 35" automatisch zu einem bestimmten Lenkeinschlag der Vorderräder 40". Hierbei kommt es zu einer Relativverdrehung zwischen der Fahrzeugkarosserie 10" und der Vorderachse 30" im zentralen Gelenk 15" und damit zu einem Schwenken um die Achse A". Da die Anbindung der Lenkstangen 35" an der Fahrzeugkarosserie 10" ortsfest ist, bedingt die relative Verlagerung der Fahrzeugkarosserie 10" eine Verschiebung der radseitigen ersten Endabschnitte 36" der Lenkstangen 35" und damit eine Verdrehung der Radträger 41" um die Lenkachsen L". Beim Durchfahren einer Kurve neigt sich die Fahrzeugkarosserie 10" zur Kurveninnenseite hin. Über die Lage der Lenkstangen 35" kann der Zusammenhang zwischen Lenkwinkel und Wankwinkel beeinflusst werden. Vorzugsweise wird der maximale Wankwinkel der Fahrzeugkarosserie 10" zur Vertikalen auf einen Wert im Bereich zwischen 10° und 20° begrenzt.

An dem Kraftfahrzeug 1" ist weiterhin eine Lenkeinrichtung 50" vorgesehen, um einen Lenkeinschlag der Vorderräder 40" zu bewirken. Zur Kontrolle des Lenkeinschlags durch den Fahrer dient eine Lenkungshandhabe 60", beispielsweise ein Lenkrad, das mit der Lenkeinrichtung 50" in Verbindung steht. Die Lenkungshandhabe 60" kann jedoch auch als Querbügel, Joystick oder dergleichen ausgeführt werden, wobei neben einer mechanischen Kopplung mit der Lenkeinrichtung 50" auch ein steer-by-wire vorgesehen werden kann.

Bei dem dritten Ausführungsbeispiel dient die Lenkungshandhabe 60" dazu, die Fahrzeugkarosserie 10" relativ zur starren Vorderachse 30" zu verschwenken. Die Radträger 41" werden dann aufgrund der Zwangskopplung der Lenkstangen 35" automatisch mitverschwenkt.

Alternativ kann ein fahrerseitiger Lenkbefehl jedoch auch zwischen die Radträger 41" und die Vorderachse 30" mechanisch eingekoppelt werden. In diesem Fall bewirken die Lenkstangen 35" automatisch ein gewünschtes Wanken der Fahrzeugkarosserie 10".

Entsprechende Lenkeinrichtungen 50" können je nach Bedarf vorgesehen und gegebenenfalls zusätzlich fremdkraftbetätigt oder fremdkraftunterstützt ausgeführt werden.

Nachfolgend ist beispielhaft ein Schubkurbelgetriebe 52" entsprechend dem zweiten Ausführungsbeispiel dargestellt. Dieses Schubkurbelgetriebe 52" stützt sich an der vorzugsweise über der Vorderachse 30" angeordneten Konsole 10a" der Fahrzeugkarosserie 10" sowie an der Vorderachse 30" ab, und zwar derart, dass bei Betätigung der Lenkungshandhabe 60" die Fahrzeugkarosserie 10" gegen die Vorderachse 30" verschwenkt. Das Schubkurbelgetriebe 52" weist einen eingangsseitigen Hebel 53" und einen ausgangsseitigen Hebel 54" auf, welche an jeweiligen Enden über ein Gelenk 55" schwenkbar miteinander verbunden sind. Das andere Ende des eingangsseitigen Hebels 53" ist drehbar an der Konsole 10a" gelagert und mit der Lenkungshandhabe 60" über eine Welle 56" oder ein Gestänge gekoppelt, um in Drehung versetzt zu werden. Der ausgangsseitige Hebel 54" schließt gelenkig außerhalb der Fahrzeuglängsmittelebene E" an einen Lenker 31" der Vorderachse 30" an.

Bei dem dritten Ausführungsbeispiel ist zwischen der Lenkungshandhabe 60" und dem Schubkurbelgetriebe 52" eine zusätzliche Getriebestufe 57" in Form eines Scheckengetriebes vorgesehen. Hierdurch kann die Lenkübersetzung zwischen der Lenkungshandhabe und dem Lenkwinkel der Vorderräder 40' beeinflusst werden. Das Schneckengetriebe kann zudem selbsthemmend ausgeführt sein. Jedoch sind auch andere Getriebetypen einsetzbar.

Die Lenkeinrichtung 50" kann so ausgeführt sein, dass sich bei einem bestimmten Lenkwinkel zwangsläufig ein bestimmter Wankwinkel der Fahrzeugkarosserie 10" einstellt. Es ist jedoch möglich, beispielsweise mit Hilfe eines Überlagerungsgetriebes, die Beziehung von Wankwinkel zu Lenkwinkel zu modifizieren.

Der Antrieb des Kraftfahrzeugs 1" erfolgt mittels eines Verbrennungsmotors oder mittels eines Elektromotors. Bei dem dargestellten Ausführungsbeispiel kommt ein Radnabenmotor 70" zum Einsatz, der vorliegend am Hinterrad 20" angeordnet ist. Grundsätzlich können jedoch auch die Vorderräder 40" oder alle Räder über einen Radnabenmotor 70" angetrieben werden.

Zur Energieversorgung kann eine Fahrzeugbatterie 80" unter der Sitzfläche 13" angeordnet werden. Bei anderen Antrieben kann an dieser Stelle auch ein etwaig benötigter Kraftstofftank untergebracht werden.

Wie im Zusammenhang mit dem ersten Ausführungsbeispiel bereits erläutert wurde, kann die Fahrzeugkarosserie 10" als geschlossene Fahrgastzelle ausgebildet werden, welche auf die Sitzposition von vorzugsweise einer Person oder von zwei Personen beschränkt ist. Figur 9 zeigt eine an eine Person angepasste Verkleidung 90", die einen vollständigen Wetterschutz für den Fahrer bietet und aerodynamisch optimiert werden kann. Der Einstieg kann über eine einzige Einstiegsöffnung erfolgen. Möglich ist ferner eine offene oder teilweise offene, beispielsweise lediglich seitlich offene Bauweise.

Zur Gewährleistung des gewünschten Wankens der Fahrzeugkarosserie 10" relativ zu der Vorderachse 30" beschränkt sich die Verkleidung 90" auf die Fahrgastzelle. Die Vorderräder 40" bleiben unverkleidet oder erhalten eine von der Verkleidung 90" der Fahrgastzelle unabhängige Radverkleidung 91".

Mit den vorstehend erläuterten Ausführungsbeispielen wird ein Kraftfahrzeugkonzept vorgestellt, welches eine sehr kompakte Bauweise mit einer einem herkömmlichen Personenkraftfahrzeug vergleichbaren Sitzposition ermöglicht.

Das Kraftfahrzeug zeichnet sich durch eine hohe Wendigkeit und einen kleinen Wendekreisdurchmesser aus.

Insbesondere eignet sich das erfindungsgemäße Fahrzeugkonzept für einsitzige Mikrokraftfahrzeuge, deren Verkehrsfläche in etwa einem Viertel derer herkömmlicher Mittelklasse-Personenkraftwagen entspricht.

Die Erfindung wurde vorstehend anhand verschiedener Ausführungsbeispiele und Abwandlungen näher erläutert. Insbesondere können technische Einzelmerkmale, welche oben im Kontext weiterer Einzelmerkmale erläutert wurden, unabhängig von diesen sowie in Kombination mit anderen Einzelmerkmalen verwirklicht werden, und zwar auch dann, wenn dies nicht ausdrücklich beschrieben ist, solange dies technisch möglich ist. Die Erfindung ist daher ausdrücklich nicht auf die beschriebenen Ausführungsbeispiele beschränkt, sondern umfasst alle durch die Patentansprüche definierten Ausgestaltungen.

### Bezugszeichenliste

- 1, 1', 1": Kraftfahrzeug
- 10; 10'; 10": Fahrzeugkarosserie
- 11; 11'; 11": Sitzposition
- 12; 12'; 12": hinterer Endabschnitt
- 13; 13": Sitzfläche
- 14; 14'; 14": vorderer Endabschnitt
- 15; 15'; 15": zentrales Gelenk
- 16; 16": Fahrerfußraum
- 17; 17": Rückenlehne
- 18; 18": Kopfstütze
- 19": Schwinge
- 20; 20'; 20": Hinterrad
- 30; 30'; 30": Vorderachse
- 31; 31'; 31": Lenker
- 32; 32'; 32": radseitiger Endabschnitt
- 33, 33': Gelenk
- 33a": Gelenk
- 33b": Gelenk
- 35'; 35": Lenkstange
- 36'; 36": erster Endabschnitt
- 37'; 37": zweiter Endabschnitt
- 40, 40'; 40": Vorderrad
- 41; 41'; 41": Radträger
- 50; 50'; 50": Lenkeinrichtung
- 52'; 52": Schubkurbelgetriebe
- 53'; 53": eingangsseitiger Hebel
- 54' ; 54": ausgangsseitiger Hebel
- 55'; 55": Gelenk
- 56": Welle
- 57": Getriebestufe
- 60; 60'; 60": Lenkungshandhabe
- 70; 70'; 70": Radnabenmotor
- 80; 80": Batterie
- 90; 90": Verkleidung der Fahrgastzelle
- 91": Radverkleidung
- 100": Feder-Dämpfer-Anordnung
- A; A'; A": sich in Fahrzeuglängsrichtung erstreckende Achse
- E; E'; E": Fahrzeuglängsmittelebene
- L', L": Lenkachse
- R; R'; R": Radmitte
- Y": in Fahrzeugquerrichtung verlaufende Schwenkachse

## Patentansprüche

1. Kraftfahrzeug (1; 1'; 1"), umfassend:
eine Fahrzeugkarosserie (10; 10'; 10") mit einer Sitzposition (11; 11'; 11") für einen Fahrer,
ein Hinterrad (20; 20'; 20"), das an einem hinteren Endabschnitt (12; 12'; 12") der Fahrzeugkarosserie (10; 10'; 10") abgestützt ist,
eine Vorderachse (30; 30'; 30"), die an einem vorderen Endabschnitt (14; 14'; 14") der Fahrzeugkarosserie (10; 10'; 10") in einer Fahrzeuglängsmittelebene (E; E'; E") um eine sich in Fahrzeuglängsrichtung erstreckende Achse (A; A'; A") drehbar gelagert ist, und zwei Vorderräder (40; 40'; 40"), die lenkbar an der Vorderachse (30; 30'; 30") angeordnet sind,
wobei die Sitzposition (11; 11'; 11") eine Sitzfläche (13; 13") aufweist, welche auf einer Höhe im Bereich der Vorderräder (40, 40', 40") liegt und ein Fahrerfußraum (16; 16") sich in Fahrzeuglängsrichtung bis in einen Bereich zwischen die Vorderräder (40; 40") erstreckt, **dadurch gekennzeichnet, dass**
eine Lenkeinrichtung (50; 50'; 50") vorgesehen ist, welche die Fahrzeugkarosserie (10; 10'; 10") derart mit den Vorderrädern (40; 40'; 40") koppelt, dass ein Wankwinkel der Fahrzeugkarosserie (10; 10'; 10") mit einem Lenkwinkel der Vorderräder (40; 40'; 40") verknüpft ist, und
die Vorderachse (30; 30'; 30") als Starrachse ausgebildet ist, welche über ein zentrales Gelenk (15; 15'; 15") auf einer Höhe im Bereich der Vorderräder (40; 40'; 40") an der Fahrzeugkarosserie (10; 10'; 10") drehbar gelagert ist.

2. Kraftfahrzeug nach Anspruch 1, **dadurch gekennzeichnet, dass** die Lenkeinrichtung (50'; 50") eine Lenkstange (35'; 35") aufweist, die mit einem ersten Endabschnitt (36'; 36") an einem Radträger (41'; 41") eines Vorderrads (40'; 40") und mit einem zweiten Endabschnitt (37'; 37") an der Fahrzeugkarosserie (10'; 10") angelenkt ist.

3. Kraftfahrzeug nach Anspruch 2, **dadurch gekennzeichnet, dass** die karosserieseitige Anlenkung der Lenkstange (35'; 35") in Bezug auf eine Fahrzeughochrichtung oberhalb der radseitigen Anlenkung liegt.

4. Kraftfahrzeug nach einem der Ansprüche 1 bis 3, **dadurch gekennzeichnet, dass** eine Lenkungshandhabe (60; 60'; 60") vorgesehen ist, über welche durch einen Fahrer die Fahrzeugkarosserie (10; 10'; 10") relativ zur Vorderachse (30; 30'; 30") verschwenkbar ist.

5. Kraftfahrzeug nach Anspruch 4, **dadurch gekennzeichnet, dass** die Lenkungshandhabe (60; 60'; 60") mit einem Schubkurbelgetriebe gekoppelt ist, welches sich an der Fahrzeugkarosserie (10; 10'; 10") sowie an der Vorderachse (30; 30'; 30") abstützt, derart, dass bei Betätigung der Lenkungshandhabe (60; 60'; 60") die Fahrzeugkarosserie (10; 10'; 10") und die Vorderachse (30; 30'; 30") gegeneinander verschwenken.

6. Kraftfahrzeug nach einem der Ansprüche 1 bis 5, **dadurch gekennzeichnet, dass** mindestens eines der Räder des Kraftfahrzeugs durch einen Radnabenmotor (70; 70'; 70") angetrieben ist.

7. Kraftfahrzeug nach Anspruch 6, **dadurch gekennzeichnet, dass** das Hinterrad (20") an einer Schwinge (19") drehbar gelagert ist, die ihrerseits schwenkbar an der Fahrzeugkarosserie (10") gelagert und durch eine Feder-Dämpfer-Anordnung (100") gegen die Fahrzeugkarosserie (10") abgestützt ist.

8. Kraftfahrzeug nach Anspruch 7, **dadurch gekennzeichnet, dass** die Feder-Dämpfer-Anordnung (100") in Bezug auf die Fahrzeuglängsrichtung hinter einer Rückenlehne der Sitzposition (11") angeordnet ist.

9. Kraftfahrzeug nach einem der Ansprüche 1 bis 8, **dadurch gekennzeichnet, dass** die Fahrzeugkarosserie (10; 10'; 10") eine auf die Sitzposition einer Person beschränkte Fahrgastzelle umfasst.

10. Kraftfahrzeug nach einem der Ansprüche 1 bis 9, **dadurch gekennzeichnet, dass** die Fahrzeugkarosserie (10; 10'; 10") eine geschlossene Fahrgastzelle umfasst.

11. Kraftfahrzeug nach einem der Ansprüche 1 bis 10, **dadurch gekennzeichnet, dass** eine Fahrzeugsbatterie (80; 80") unter der Sitzfläche (13; 13") angeordnet ist.

## Claims

1. Motor vehicle (1; 1'; 1"), comprising:
a vehicle body (10; 10'; 10") with a sitting position (11; 11'; 11") for a driver,
a rear wheel (20; 20'; 20") which is supported on a rear end portion (12; 12'; 12") of the vehicle body (10; 10'; 10"),
a front axle (30; 30'; 30") which is mounted on a front end portion (14; 14'; 14") of the vehicle body (10; 10'; 10") in a vehicle longitudinal centre plane (E; E'; E") so as to be rotatable about an axis (A; A'; A") extending in the longitudinal direction of the vehicle, and
two front wheels (40; 40'; 40") which are arranged in a steerable manner on the front axle (30; 30'; 30"),
wherein the sitting position (11; 11'; 11") has a seat surface (13; 13") which is situated at a height in the region of the front wheels (40; 40'; 40"), and a driver's footwell (16; 16") extends in the longitudinal direction of the vehicle into a region between the front wheels (40; 40") **characterized in that**
a steering device (50; 50'; 50") is provided which couples the vehicle body (10; 10'; 10") to the front wheels (40; 40'; 40") in such a manner that a roll angle of the vehicle body (10; 10'; 10") is linked to a steering angle of the front wheels (40; 40'; 40"), and
the front axle (30; 30'; 30") is in the form of a rigid axle which is mounted rotatably on the vehicle body (10; 10'; 10") at a height in the region of the front wheels (40; 40'; 40") via a central joint (15; 15'; 15").

2. Motor vehicle according to Claim 1, **characterized in that** the steering device (50'; 50") has a steering rod (35'; 35") which is coupled by a first end portion (36'; 36") to a wheel carrier (41'; 41") of a front wheel (40'; 40") and by a second end portion (37'; 37") to the vehicle body (10'; 10").

3. Motor vehicle according to Claim 2, **characterized in that** the body-side coupling of the steering rod (35'; 35") lies above the wheel-side coupling with respect to a vertical direction of the vehicle.

4. Motor vehicle according to one of Claims 1 to 3, **characterized in that** a steering handle (60; 60'; 60") is provided via which the vehicle body (10; 10'; 10") can be pivoted relative to the front axle (30; 30'; 30") by a driver.

5. Motor vehicle according to Claim 4, **characterized in that** the steering handle (60; 60'; 60") is coupled to a slider-crank mechanism, which is supported on the vehicle body (10; 10'; 10") and on the front axle (30; 30'; 30"), in such a manner that, when the steering handle (60; 60'; 60") is actuated, the vehicle body (10; 10'; 10") and the front axle (30; 30'; 30") pivot in relation to each other.

6. Motor vehicle according to one of Claims 1 to 5, **characterized in that** at least one of the wheels of the motor vehicle is driven by a wheel hub motor (70; 70'; 70").

7. Motor vehicle according to Claim 6, **characterized in that** the rear wheel (20") is mounted rotatably on a swing arm (19") which, for its part, is mounted pivotably on the vehicle body (10") and is supported against the vehicle body (10") by a spring-damper arrangement (100").

8. Motor vehicle according to Claim 7, **characterized in that** the spring-damper arrangement (100") is arranged behind a backrest of the sitting position (11") with respect to the longitudinal direction of the vehicle.

9. Motor vehicle according to one of Claims 1 to 8, **characterized in that** the vehicle body (10; 10'; 10") comprises a passenger cell which is limited to the sitting position of a person.

10. Motor vehicle according to one of Claims 1 to 9, **characterized in that** the vehicle body (10; 10'; 10") comprises a closed passenger cell.

11. Motor vehicle according to one of Claims 1 to 10, **characterized in that** a vehicle battery (80; 80") is arranged under the seat surface (13; 13").

## Revendications

1. Véhicule automobile (1; 1'; 1"), comprenant:
une carrosserie de véhicule (10; 10'; 10") avec un siège (11; 11'; 11") pour un conducteur,
une roue arrière (20; 20'; 20"), qui est appuyée à une partie d'extrémité arrière (12; 12'; 12") de la carrosserie de véhicule (10; 10'; 10"),
un essieu avant (30; 30'; 30"), qui est monté à une partie d'extrémité avant (14; 14'; 14") de la carrosserie de véhicule (10; 10' 10") d'une façon rotative autour d'un axe (A; A'; A") s'étendant dans la direction longitudinale du véhicule dans un plan médian longitudinal du véhicule (E; E'; E"), et
deux roues avant (40; 40'; 40") qui sont disposées de façon orientable sur l'essieu avant (30; 30'; 30"),
dans lequel le siège (11; 11'; 11") présente une face de siège (13; 13"), qui est située en hauteur dans la région des roues avant (40, 40', 40") et un espace pour les pieds du conducteur (16; 16") s'étend dans la direction longitudinale du véhicule jusque dans une région située entre les roues avant (40; 40"), **caractérisé en ce que**
il est prévu un système de direction (50; 50'; 50"), qui couple la carrosserie de véhicule (10; 10'; 10") aux roues avant (40; 40'; 40"), de telle manière qu'un angle de roulis de la carrosserie de véhicule (10; 10'; 10") soit relié à un angle de braquage des roues avant (40; 40'; 40"), et
l'essieu avant (30; 30'; 30") est formé par un essieu rigide, qui est monté de façon rotative sur la carrosserie de véhicule (10; 10'; 10") au moyen d'une articulation centrale (15; 15'; 15") à une hauteur située dans la région des roues avant (40; 40'; 40").

2. Véhicule automobile selon la revendication 1, **caractérisé en ce que** le système de direction (50'; 50") présente un arbre de direction (35'; 35"), qui est articulé par une première partie d'extrémité (36'; 36") à un support de roue (41'; 41") d'une roue avant (40'; 40") et par une deuxième partie d'extrémité (37'; 37") à la carrosserie de véhicule (10'; 10").

3. Véhicule automobile selon la revendication 2, **caractérisé en ce que** la liaison de l'arbre de direction (35'; 35") est située au-dessus de la liaison côté roue par rapport à une direction verticale du véhicule.

4. Véhicule automobile selon l'une quelconque des revendications 1 à 3, **caractérisé en ce qu'**il est prévu une manette de direction (60; 60'; 60"), par laquelle la carrosserie de véhicule (10; 10'; 10") peut pivoter par rapport à un essieu avant (30; 30'; 30") sous la commande d'un conducteur.

5. Véhicule automobile selon la revendication 4, **caractérisé en ce que** la manette de direction (60; 60'; 60") est couplée à un système bielle-manivelle, qui prend appui sur la carrosserie de véhicule (10; 10'; 10") ainsi que sur l'essieu avant (30; 30'; 30"), de telle manière que lors de l'actionnement de la manette de direction (60; 60'; 60") la carrosserie de véhicule (10; 10'; 10") et l'essieu avant (30; 30'; 30") pivotent l'un par rapport à l'autre.

6. Véhicule automobile selon l'une quelconque des revendications 1 à 5, **caractérisé en ce qu'**au moins une des roues du véhicule automobile est entraînée par un moteur sur moyeu de roue (70; 70'; 70").

7. Véhicule automobile selon la revendication 6, **caractérisé en ce que** la roue arrière (20") est montée de façon rotative sur un bras oscillant (19"), qui est à son tour monté de façon pivotante sur la carrosserie de véhicule (10") et s'appuie sur la carrosserie de véhicule (10") par un système d'amortisseur à ressort (100").

8. Véhicule automobile selon la revendication 7, **caractérisé en ce que** le dispositif d'amortisseur à ressort (100") est placé derrière le dossier du siège (11") par rapport à la direction longitudinale du véhicule.

9. Véhicule automobile selon l'une quelconque des revendications 1 à 8, **caractérisé en ce que** la carrosserie de véhicule (10; 10'; 10") comprend un habitacle limité à une personne sur le siège.

10. Véhicule automobile selon l'une quelconque des revendications 1 à 9, **caractérisé en ce que** la carrosserie de véhicule (10; 10'; 10") comprend un habitacle fermé.

11. Véhicule automobile selon l'une quelconque des revendications 1 à 10, **caractérisé en ce qu'**une batterie de véhicule (80; 80") est disposée sous la face de siège (13; 13").
